# EUROPEAN PATENT APPLICATION

(11) **EP 4 686 018 A1**
(43) Date of publication of application: **28.01.2026**
(21) Application number: 25188281.7
(22) Date of filing: 08.07.2025
(51) Int. Cl.: H02G 1/08, G02B 6/54

(54) **INSTRUMENTATION LEAD PULLING ADAPTER AND TECHNIQUE**

(30) Priority: 26.07.2024 US 202418786374
(71) Applicant: RTX Corporation, Farmington, CT 06032 (US)
(72) Inventor: WARREN, Eli, Wethersfield (US); HACKETT, Bryan James, Berlin (US); TOMICK, Hunter, Lebanon (US)
(74) Representative: Dehns

(57) **Abstract**

An adapter (202) for pulling a lead wire through an engine assembly comprises a lead connector (206) configured to connect with a lead wire connector (204) associated with a lead wire (114). A width of the lead connector (206) is equal to or less than a width of the lead wire connector (204). A pull connector (210) is configured to connect with a pull cable (208) threaded through the engine assembly to enable a pulling force to be applied to the adapter (202). The pull connector (210) is integrated with the lead connector (206).

## Description

### TECHNICAL FIELD

This disclosure relates generally to an apparatus for pulling a device lead through an inaccessible portion of a gas turbine aircraft engine. More specifically, this disclosure relates to an adapter for connecting to a lead connector for pulling the device lead through an inaccessible portion of the gas turbine aircraft engine.

### BACKGROUND

In the area of gas turbine engine development and validation, instrumented components play a key role in data-gathering to inform design and operation decisions. The general form of a gas turbine engine comprises a series of concentric cases and the pressure differential between the cases is often large. Due to the interest in maintaining said pressure differentials between the concentric cases, challenges often arise with the installation of various wired sensors. Areas of interest for data-gathering are typically internal to the engine casings resulting in lead paths that often need to snake around and through various case walls. Said pathways are often blind with no way to promote lead movement except to attach a pull wire which inherently adds risk to lead damage and increases diameter of the lead being pulled through the engine casing while decreasing the ability to maneuver tight corners within the engine casing. Thus, some manner for more easily maneuvering device leads through inaccessible areas of a gas turbine engine compartment would be of great benefit.

### SUMMARY

This disclosure in a first embodiment relates to an adapter for pulling a lead wire through an engine assembly comprises a lead connector configured to connect with a lead wire connector associated with a lead wire. A width of the lead connector is equal to or less than a width of the lead wire connector. A pull connector is configured to connect with a pull cable threaded through the engine assembly to enable a pulling force to be applied to the adapter. The pull connector is integrated with the lead connector.

Any single one or any combination of the following features may be used with the first embodiment. The adapter where the lead connector further defines a chamber therein for receiving a portion of the lead wire connector to prevent damage thereto. The chamber further may include: a first cylindrical portion having a first end defining an opening in the lead connector; and a second conical portion having a base connected to a second end of the first cylindrical portion. The pull connector further defines an opening therein through which the pull cable may be inserted for applying the pulling force to the adapter. The lead connector further may include a cylinder defining a threaded surface thereon configured to threadedly engage a second threaded surface on an interior of the lead wire connector. The pull connector defines chamfered edges on at least a portion of leading edges thereof to minimize snagging when pulling through the engine assembly. The adapter further including a conical portion configured to integrate the lead connector to the pull connector. The pull connector further may include a substantially rectangular member extending outward from the lead connector.

In a second embodiment, an adapter pulls a lead wire through an engine assembly. The adapter includes a cylindrical lead connector defining a threaded surface thereon configured to threadedly engage a second threaded surface on an interior of a lead wire connector associated with a lead wire. A diameter of the cylindrical lead connector is equal to or less than a diameter of the lead wire connector. The cylindrical lead connector further defines a chamber therein for receiving a portion of the lead wire connector to prevent damage thereto. A pull connector is configured to connect with a pull cable threaded through the engine assembly to enable a pulling force to be applied to the adapter. The pull connector is integrated with the cylindrical lead connector.

Any single one or any combination of the following features may be used with the second embodiment. The adapter where the chamber further may include: a first cylindrical portion having a first end defining an opening in the cylindrical lead connector; and a second conical portion having a base connected to a second end of the first cylindrical portion. The pull connector further defines an opening therein through which the pull cable may be inserted for applying the pulling force to the adapter. The pull connector defines chamfered edges on at least a portion of leading edges thereof to minimize snagging when pulling through the engine assembly. The adapter further including a conical portion configured to integrate the cylindrical lead connector to the pull connector. The pull connector further may include a substantially rectangular member extending outward from the cylindrical lead connector. The adapter may include a shrink wrap surrounding the adapter and the lead wire connector to prevent rotation of the adapter within the lead wire connector.

In a third embodiment includes a method for pulling a lead wire through an engine assembly. The method also includes connecting a lead connector of an adapter with a lead wire connector associated with a lead wire, where a width of the lead connector is equal to or less than a width of the lead wire connector; and connecting a pull connector integrated with the lead connector of the adapter with a pull cable threaded through the engine assembly, and applying a pulling force to the adapter via a force applied through the pulling cable.

Any single one or any combination of the following features may be used with the third embodiment. The method of connecting the lead connector further may include inserting a portion of the lead wire connector into a chamber defined by the lead connector to receive the portion of the lead wire connector to prevent damage thereto. Connecting the pull connector further may include inserting the pull cable through an opening defined in the pull connector to apply the pulling force to the adapter. Connecting the lead connector further may include threadedly engaging a cylinder of the lead connector defining a threaded surface thereon with a second threaded surface on an interior of the lead wire connector. The method may include surrounding a shrink wrap around the adapter and the lead wire connector to prevent rotation of the adapter within the lead wire connector.

Other technical features may be readily apparent to one skilled in the art from the following Figs, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
Fig. 1 illustrates an exploded cross-sectional view of a gas turbine engine compartment to illustrate the inaccessible areas through which a device lead must be routed;
Fig. 2 illustrates a block diagram of the lead pulling adapter;
Fig. 3 illustrates a prospective view of one embodiment of a lead pulling adapter;
Fig. 4 illustrates a side view of the lead pulling adapter embodiment of Fig. 3;
Fig. 5 illustrates a cross-sectional view of the lead pulling adapter embodiment of Fig. 3; and
Fig. 6 illustrates a flow diagram describing the technique to use the adapter.

### DETAILED DESCRIPTION

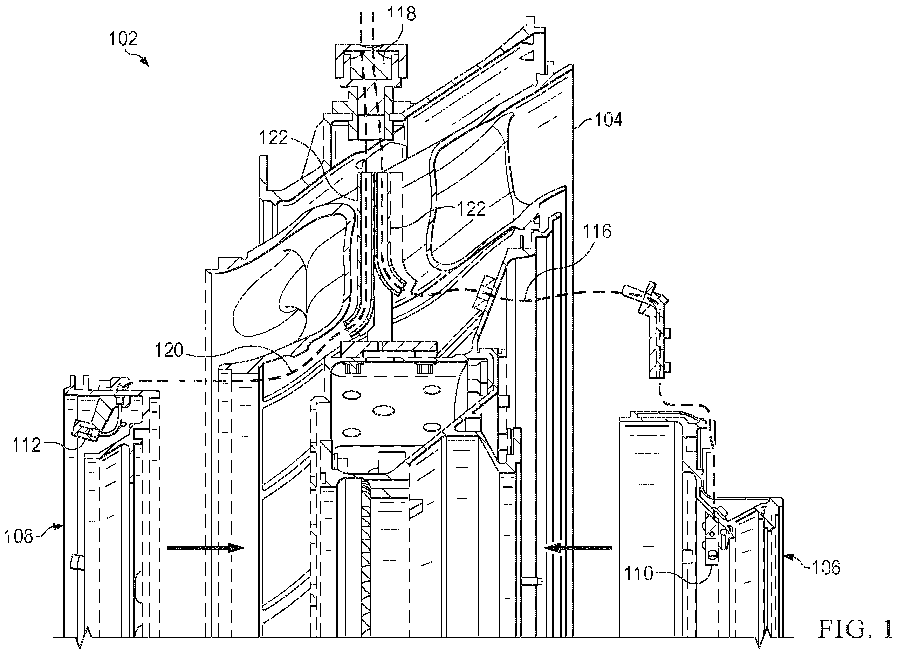

FIGS. 1 through 6, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

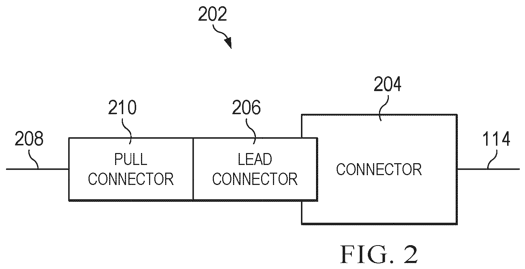

FIG. 1 illustrates an example of a gas turbine engine assembly 102 through which lead wires must be routed in order to provide outputs from sensors located within the gas turbine engine assembly 102. The gas turbine engine assembly 102 comprises a first portion 104 that interconnects with a second portion 106 and a third portion 108. It will be appreciated that the gas turbine engine assembly 102 illustrated with respect to Fig. 1 is merely one example of an engine assembly. Any engine assembly through which lead wires must be maneuvered would find the adapter of the present disclosure useful. Within the gas turbine engine assembly 102, a first sensor 110 is located in the second portion 106 of the gas turbine engine assembly and a second sensor 112 is located in the third portion 108 of the gas turbine engine assembly 102. The sensors 110 and 112 have lead wires 114 (Fig. 2) connected thereto (represented by dashed lines) that must be maneuvered through the first portion 104 of the gas turbine engine assembly 102. When the lead wire 114 connected to sensor 110 reaches point 116, the engine assembler no longer has access in order to maneuver and secure the lead wire 114 through the engine assembly 102. This lack of access continues until lead wire 114 exits the top 118 of the gas turbine engine assembly 102. Similarly, lead wire 114 connected to sensor 112 enters the first portion 104 of the gas turbine engine assembly 102 at point 120 and the engine assembler no longer has access in order to maneuver and secure the lead wire 114 within the gas turbine engine assembly 102.

A further problem for maneuvering or threading lead wires 114 through the gas turbine engine assembly 102 comes from the use of securing tubes 122 located within the inaccessible parts of the first portion 104 of the gas turbine engine assembly 102. The lead wires 114 must be secured within the gas turbine engine assembly 102 at periodic intervals in order to prevent whiplash movement of the lead wires 114 within the gas turbine engine assembly. The securing tubes 122 are used to prevent movement of lead wires 114 within the gas turbine engine assembly 102. The securing tubes 122 are placed within the inaccessible areas within the gas turbine engine assembly 102 such as the area between point 116 and top 118 in order to securely fasten the lead wires 114 and prevent undesirable whiplash movement. However, threading of lead wires 114 and their associated connectors through the securing tubes 122 within the inaccessible areas of the gas turbine engine assembly 102 is difficult.

One solution for threading lead wires 114 through inaccessible spaces within the gas turbine engine assembly 102 is to place pull cables through the areas that require lead wires to pass therethrough. The pull cables are used to pull the lead wires and their associated connectors along the pathway through which the pull cables are threaded in order to position the lead wires 114 within these pathways. The problem arises with the manner for interconnecting the pull cables with the lead wires 114. The spaces through which the lead wires are to be maneuvered often have small tolerances and may include sharp turns making movement of the lead line through the available opening very difficult. Thus, the apparatus for interconnecting the lead wire 114 with the pull cable must not exceed the diameter of the connectors of the lead line in order to enable the lead line to be maneuvered through the available spaces.

Referring now to Fig. 2, there is illustrated a block diagram of the adapter 202 for interconnecting into a lead wire connector 204 of a lead wire 114. The adapter 202 has a lead connector 206 that connects within the interior of the lead wire connector 204 associated with the lead wire 114 and a pull connector 210 that connects with the pull cable 208. The adapter 202 is configured in such a fashion that its diameter is always less than or equal to the diameter of the lead wire connector 204. In this fashion, the adapter 202 may be more easily maneuvered through the spaces for the lead wire 114 by the pull cable 208. The lead connector 206 of the adapter 202 is integrated with the pull connector 210 that enables connection of the adapter 202 with the pull cable 208. Once securely connected, the adapter 202 may be used to pull the lead wire 114 and lead wire connector 204 through the desired spaces by merely pulling on the pull cable 208 that pulls the connected adapter 202 which pulls the lead wire connector 204 and associated lead wire 114.

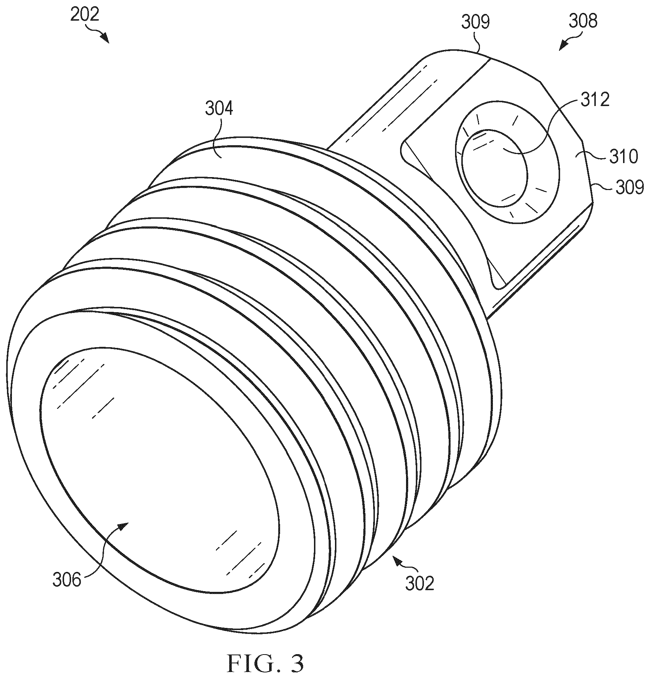

Referring now to Fig. 3, there is illustrated one embodiment of the adapter 202. In this embodiment, the lead connector 206 consist of a threaded cylindrical portion 302 wherein the threads 304 are defined on the exterior surface of the cylindrical portion 302. The threads 304 are configured to engage the threads located on the interior surface of the lead wire connector 204. The threaded cylindrical portion 302 further defines an interior chamber 306 into which the center pin (or other components) of the lead wire connector 204 may be inserted in order to avoid damage thereto. Thus, the threaded cylindrical portion 302 functions as a male connector engaging with the female connector provided by the lead wire connector 204.

The pull connector 210 is integrated with the threaded cylindrical portion 302 using a pull tab 308. The pull tab 308 comprises a substantially rectangular member extending outward from the threaded cylindrical portion 302. The pull tab 308 includes a pair of substantially flat surfaces 310 on opposite sides of the pull tab 308. The pull tab 308 defines chamfered edges 309 on leading edges thereof to minimize snagging when pulling through the gas turbine engine assembly 102. The pull tab 308 defines a hole 312 passing between the flat surfaces 310 of the pull tab 308. The hole 312 is of sufficient size to enable a pull cable 208 to be inserted therein to enable the pull cable 208 to place force on the pull tab 308 and integrated threaded cylindrical portion 302. When the threaded cylindrical portion 302 is threadedly engaged within a lead wire connector 204, the pulling of the pull cable 208 causes the adapter 202 to pull the lead wire connector 204 through the engine assembly 102 along with the adapter.

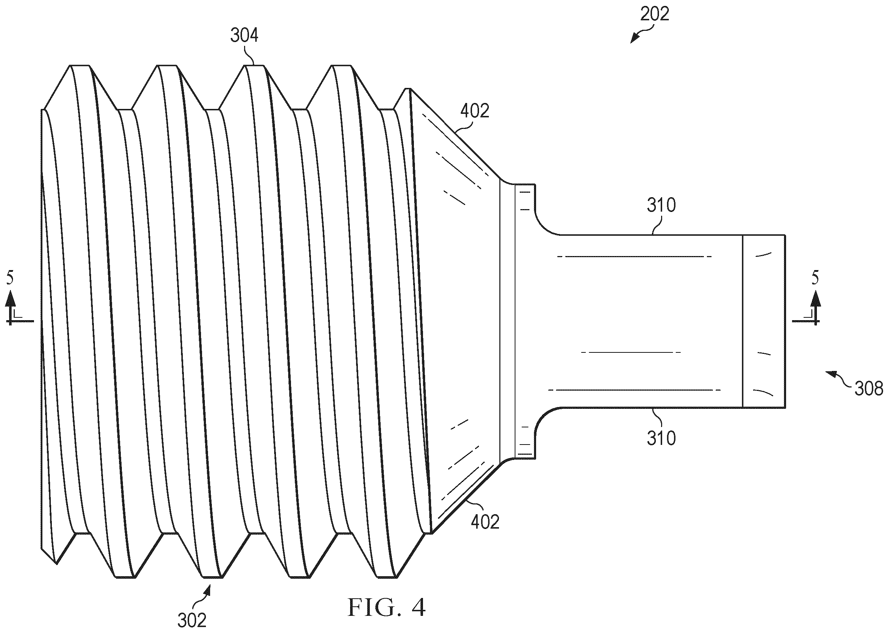

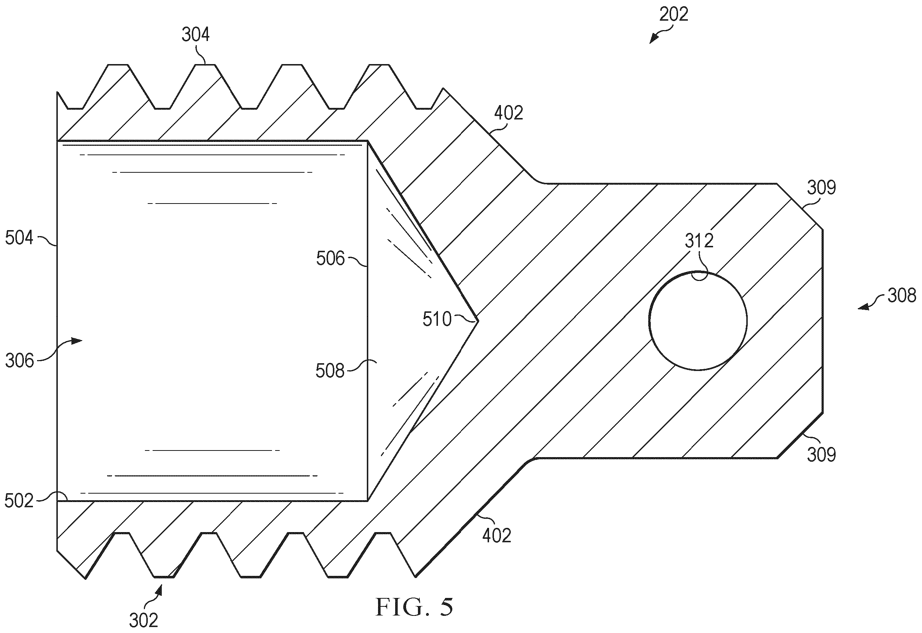

Referring now to Fig. 4, there is illustrated a side view of the adapter 202. As previously discussed, the threaded cylindrical portion 302 is integrated with the pull tab 308. The threaded cylindrical portion 302 and pull tab 308 are connected by a conical surface 402 that gradually decreases in size from the maximum diameter of the threaded cylindrical portion 302 to the size of the pull tab 308. A cross-sectional view of the adapter 202 is more particularly illustrated along section line AA is illustrated in Fig. 5.

The cross-sectional view of Fig. 5 more particularly illustrates the chamber 306 defined within the interior of the threaded cylindrical portion 302. The chamber 306 comprises a first portion 502 which is a cylindrical chamber extending from the edge 504 of the threaded cylindrical portion 302 to a point 506 within the interior of the threaded cylindrical portion 302. The remainder of the chamber 306 comprises a conical portion 508 comprising a conical chamber having its base beginning at point 506. The conical chamber of the second portion 508 has its base at 506 and extends forward toward the pull tab 308 to a point 510. The conical portion 508 of the chamber 306 provides an opening into which a microdot center pin within the lead wire connector 204 may extend into the adapter 202 in order to prevent bending or damage of the center pin. The hole 312 defined within the pull tab 308 is also more particularly illustrated in Fig. 5.

Once the adapter 202 is threaded into a lead wire connector 204, the interconnected adapter 202 and the lead wire connector 204 may have a heat shrink material enclosed around the connected assembly. This prevents inadvertent torque being applied to the adapter 202 causing it to become unthreaded from the lead wire connector 204. This enables the adapter 202 and lead wire connector 204 to remain connected when being pulled through the gas turbine engine assembly preventing the lead wire connector 204 from becoming stranded in the interior of the engine assembly 102.

While the foregoing description with respect to Figs. 3-5 has been made with respect to a particular embodiment of the adapter 202, the mechanism for interconnecting with the lead wire connector 204 may be configured in any particular manner as long as the adapter 202 has a diameter that is not greater than that of the lead wire connector. Additionally, the manner for interconnecting the pull cable 208 to the pull connector 210 may comprise any configuration that enables the pull cable to be securely fastened to the pull connector 210 to enable pulling of the adapter 202 through the inaccessible spaces of the gas turbine engine assembly 102.

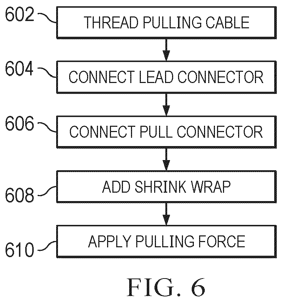

Referring now to Fig. 6, there is illustrated a flow diagram of the technique for using the adapter 202 described herein above to pull a lead wire 114 through a gas turbine engine assembly 102. A pulling cable is threaded through the gas turbine engine assembly 102 at step 602 during the engine assembly process. A lead connector 206 of an adapter 202 is connected at step 604 with a lead wire connector 204 associated with a lead wire 114. A width of the lead connector 206 is equal to or less than a width of the lead wire connector 204. A pull connector 210 integrated with the lead connector 206 of the adapter 202 is connected with the pull cable 208 threaded through the gas turbine engine assembly 102 at step 606. A shrink wrap is surrounded around the adapter 202 and the lead wire connector 204 at step 608 to prevent rotation of the adapter within the lead wire connector. A pulling force is applied at step 610 to the adapter via a force applied through the pulling cable.

The above described adapter 202 provides a number of benefits when installing lead wires 114 within a gas turbine engine. The risk of damaging a sensor and its measurement capabilities is lowered from those of traditional installation methods. The adapter 202 allows for blind routing of the lead wire 114 through tight and inaccessible areas of a gas turbine engine assembly 102. The adapter 202 does not add to the overall size of the lead wire connector 204 or its associated lead wire 114. The adapter 202 provides flexibility to the routing path especially with respect to tight bands within the routing path. The adapter 202 expands the design space available for lead wire 114 support. Existing techniques such as tack-strapping but requires access whereas the pull wire technique enables the use of support tubes and blind areas that maximize unsupported lead length requirements that can be met. Finally, the adapter 202 provides advantages over alternatives such as wrapping the pull wire around the microdot shell of the lead wire connector 204 because the wrapping wire does not add to the diameter of the assembly. The force is applied to the rear of the assembly creating a hinging point or line that may cause the conductor to bend to one side causing further restrictions in a bend of the routing pathway.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An adapter for pulling a lead wire through an engine assembly, comprising:
a lead connector configured to connect with a lead wire connector associated with a lead wire, wherein a width of the lead connector is equal to or less than a width of the lead wire connector; and
a pull connector configured to connect with a pull cable threaded through the engine assembly to enable a pulling force to be applied to the adapter, wherein the pull connector is integrated with the lead connector.

2. The adapter of claim 1, wherein the lead connector further defines a chamber therein for receiving a portion of the lead wire connector to prevent damage thereto.

3. The adapter of claim 2, wherein the chamber further comprises:
a first cylindrical portion having a first end defining an opening in the lead connector; and
a second conical portion having a base connected to a second end of the first cylindrical portion.

4. The adapter of any preceding claim, wherein the pull connector further defines an opening therein through which the pull cable may be inserted for applying the pulling force to the adapter.

5. The adapter of any preceding claim, wherein the lead connector further comprises a cylinder defining a threaded surface thereon configured to threadedly engage a second threaded surface on an interior of the lead wire connector.

6. The adapter of any preceding claim, wherein the pull connector defines chamfered edges on at least a portion of leading edges thereof to minimize snagging when pulling through the engine assembly.

7. The adapter of any preceding claim further including a conical portion configured to integrate the lead connector to the pull connector.

8. The adapter of any preceding claim, wherein the pull connector further comprises a substantially rectangular member extending outward from the lead connector.

9. An adapter for pulling a lead wire through an engine assembly, comprising:
a cylindrical lead connector defining a threaded surface thereon configured to threadedly engage a second threaded surface on an interior of a lead wire connector associated with a lead wire, wherein a diameter of the cylindrical lead connector is equal to or less than a diameter of the lead wire connector, wherein the cylindrical lead connector further defines a chamber therein for receiving a portion of the lead wire connector to prevent damage thereto; and
a pull connector configured to connect with a pull cable threaded through the engine assembly to enable a pulling force to be applied to the adapter, wherein the pull connector is integrated with the cylindrical lead connector.

10. The adapter of claim 9, wherein:
the chamber further comprises: a first cylindrical portion having a first end defining an opening in the cylindrical lead connector; and a second conical portion having a base connected to a second end of the first cylindrical portion; and/or
the pull connector further defines an opening therein through which the pull cable may be inserted for applying the pulling force to the adapter; and/or
the pull connector defines chamfered edges on at least a portion of leading edges thereof to minimize snagging when pulling through the engine assembly; and/or
the adapter further includes a conical portion configured to integrate the cylindrical lead connector to the pull connector; and/or
wherein the pull connector further comprises a substantially rectangular member extending outward from the cylindrical lead connector.

11. The adapter of claim 9 or 10 further comprising a shrink wrap surrounding the adapter and the lead wire connector to prevent rotation of the adapter within the lead wire connector.

12. A method for pulling a lead wire through an engine assembly, comprising:
connecting a lead connector of an adapter with a lead wire connector associated with a lead wire, wherein a width of the lead connector is equal to or less than a width of the lead wire connector; and
connecting a pull connector integrated with the lead connector of the adapter with a pull cable threaded through the engine assembly; and
applying a pulling force to the adapter via a force applied through the pulling cable.

13. The method of claim 12, wherein connecting the lead connector further comprises inserting a portion of the lead wire connector into a chamber defined by the lead connector to receive the portion of the lead wire connector to prevent damage thereto; and/or
wherein connecting the pull connector further comprises inserting the pull cable through an opening defined in the pull connector to apply the pulling force to the adapter.

14. The method of claim 12 or 13, wherein connecting the lead connector further comprises threadedly engaging a cylinder of the lead connector defining a threaded surface thereon with a second threaded surface on an interior of the lead wire connector.

15. The method of claim 12, 13 or 14 further comprising surrounding a shrink wrap around the adapter and the lead wire connector to prevent rotation of the adapter within the lead wire connector.
